(19) Europäisches Patentamt
European Patent Office
Office européen des brevets

(11) Veröffentlichungsnummer: **0 061 090**
**B1**

(12) **EUROPÄISCHE PATENTSCHRIFT**

(45) Veröffentlichungstag der Patentschrift: **19.06.85**

(51) Int. Cl.⁴: **G 03 G 5/06,** G 03 G 5/14, C 09 B 29/10

(21) Anmeldenummer: **82102001.3**

(22) Anmeldetag: **12.03.82**

(54) **Elektrophotographisches Aufzeichnungsmaterial.**

(30) Priorität: **20.03.81 DE 3110957**

(43) Veröffentlichungstag der Anmeldung: **29.09.82 Patentblatt 82/39**

(45) Bekanntmachung des Hinweises auf die Patenterteilung: **19.06.85 Patentblatt 85/25**

(84) Benannte Vertragsstaaten: **BE DE FR GB IT NL**

(56) Entgegenhaltungen:
**DE - A - 1 961 494**
**DE - A - 2 722 332**
**DE - B - 1 193 363**

(73) Patentinhaber: **BASF Aktiengesellschaft, Carl-Bosch-Strasse 38, D-6700 Ludwigshafen (DE)**

(72) Erfinder: **Dimmler, Manfred, Dr., Nordring 53, D-6701 Dannstadt-Schauernheim (DE)**
Erfinder: **Hoffmann, Gerhard, Dr., Pappelstrasse 22, D-6701 Otterstadt (DE)**
Erfinder: **Buhl, Dieter, Kaethe-Kollwitz-Strasse 4A, D-6710 Frankenthal (DE)**

**EP 0 061 090 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein elektrophotographisches Aufzeichnungsmaterial bestehend aus einem elektrisch leitfähigen Trägermaterial und einer photohalbleitenden Doppelschicht aus organischen Materialien sowie ihre Verwendung für reprographische Zwecke.

Elektrophotographische Aufzeichnungsmaterialien bestehen entweder aus einer homogenen Schicht eines Photohalbleiters auf einem elektrisch leitfähigen Trägermaterial oder aus mehreren, übereinander angeordneten Schichten auf einem Träger. Aufzeichnungsmaterialien mit dieser mehrschichtigen sogenannten Kompositstruktur sind aufgebaut aus einem leitfähigen Träger, einer ersten Schicht, die Ladungsträger erzeugende Verbindungen enthält und einer darüber angeordneten zweiten Schicht mit Ladungsträger transportierenden Stoffen. Solche Kompositstrukturen sind u. a. in der DE-OS 2 220 408 beschrieben. Auch sind bereits eine Reihe von Verbindungen offenbart, welche für derartige elektrophotographische Aufzeichnungsmaterialien als Ladungsträger erzeugende Substanzen geeignet sind. Darunter fallen u. a. symmetrische Bisazofarbstoffe, die als zentrale Einheit einen Oxdiazolring enthalten (JP-OS 2129/1979, JP-OS 12742/1979). Andere symmetrische Oxdiazolderivate sind als Ladungsträger transportierende Verbindungen bekannt (DE-OS 2 715 714).

Es war Aufgabe der vorliegenden Erfindung, hochlichtempfindliche elektrophotographische, organische Photohalbleiter enthaltende Aufzeichnungsmaterialien bereitzustellen, die möglichst einfach aus einer Farbstoffpigmentdispersion hergestellt werden können. Das elektrophotographische Element sollte weiterhin biegsam, elastisch und abriebfest sein.

Die Lösung der Aufgabe geht von einem elektrophotographischen Aufzeichnungsmaterial aus, das sich

a) aus einem elektrisch leitfähigen Trägermaterial,
b) einer ersten Schicht, die Ladungsträger erzeugende Farbstoffe bestimmter Art enthält, mit einer Dicke von 0,005 bis 5 µm und
c) einer zweiten, für das aktinische Licht weitgehend transparenten Schicht aus isolierenden organischen Materialien mit mindestens einer, im Licht Ladungen transportierenden Verbindung

zusammensetzt.

Gegebenenfalls können Haft- und Sperrschichten zwischen den einzelnen Schichten a), b) und c) eingebaut werden.

Gegenstand der Erfindung sind demnach Farbstoffe, die in der ersten Schicht des elektrophotographischen Aufzeichnungsmaterials als Ladungsträger erzeugende Komponenten wirksam sind.

Es war überraschend, daß als farblich abdeckende, Ladungsträger erzeugende Schichten für die elektrophotographischen Aufzeichnungsmaterialien Schichten mit Farbstoffen der allgemeinen Formel I

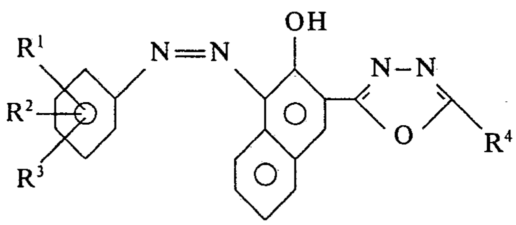

(I)

geeignet sind, in der

$R^1$ bis $R^3$ Wasserstoff, Halogen, Alkyl, Nitro, Cyan,
$R^4$ Phenyl, Halogenphenyl, Alkylphenyl, Nitrophenyl, Dialkylaminophenyl bedeuten.

Bevorzugt sind Verbindungen der Formel II

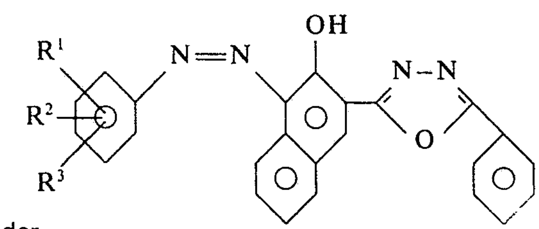

(II)

in der
$R^1$ bis $R^3$ Wasserstoff, Halogen, $C_1$—$C_4$-Alkyl, Nitro, Cyan bedeuten.

Diese Verbindungen können erhalten werden durch Umsetzung von $\beta$-Oxynaphthoesäureester mit Hydrazinhydrat in einem geeigneten Lösungsmittel, z. B. Methylglykol, zum $\beta$-Oxynaphthoesäurehydrazid. Dann wird das Hydrazid mit gegebenenfalls substituierten Säurechloriden acyliert bzw. benzoyliert und anschließend mit $P_2O_5$ in N-Methylpyrrolidon als Lösungsmittel zu den entsprechenden

2,5-disubstituierten Oxdiazolen umgesetzt, welche bei der Farbstoffsynthese als Kupplungskomponente eingesetzt werden.

Zur Herstellung der erfindungsgemäßen elektrophotographischen Aufzeichnungsmaterialien wird die erste, Ladungsträger erzeugende Schicht in Form einer Dispersion auf den elektrisch leitfähigen Schichtträger aufgebracht. Die Herstellung der Dispersion für die erste Schicht erfolgt durch gemeinsames Rollen von etwa 20 bis 85 Gewichtsprozent des Feststoffgehaltes der Dispersion an einem oder mehreren der erfindungsgemäß geeigneten Farbstoffe und 80 bis 15 Gewichtsprozent an einem hierfür üblichen Bindemittel, das gegebenenfalls Sperrschichteigenschaften aufweisen kann, in Form einer Lösung in einem organischen leicht verdampfbaren Lösungsmittel.

Die erste Schicht wird in einer Dicke von etwa 0,005 bis 5 µm, vorzugsweise 0,05 bis 1,4 µm gegossen, wobei hierunter die Feststoffschichtdicke verstanden werden soll. Zwischen dem Träger und der ersten Schicht kann eine Haftschicht in einer Dicke von etwa 0,05 bis 5 µm, vorzugsweise 0,1 bis 0,8 µm angeordnet werden.

Über der ersten Schicht wird die transparente zweite Schicht ebenfalls durch Gießen aus einer Lösung angeordnet. Die Dicke der zweiten Schicht liegt vorzugsweise zwischen 2 und 40 µm. Sie setzt sich aus 30 bis 60 Gewichtsprozent einer oder mehrerer ladungsträgertransportierenden Verbindungen, 65 bis 35 Gewichtsprozent an einem oder mehreren hierfür üblichen Bindemitteln, 0,1 bis 4 Gewichtsprozent an Zusätzen, die die mechanischen Eigenschaften verbessern und gegebenenfalls bis zu 5 Gewichtsprozent an sensibilisierenden oder aktivierenden Verbindungen zusammen. Der Gießprozeß erfolgt aus einem niedrigsiedenden Lösungsmittel.

Zwischen der ersten und der zweiten Schicht ist gegebenenfalls eine Sperrschicht von etwa 0,05 bis 1,5 µm, vorzugsweise 0,1 bis 0,5 µm angeordnet, während es je nach vorgesehener Verwendung des elektrophotographischen Aufzeichnungsmaterials angemessen sein kann, eine als Deck- und Schutzschicht wirkende inaktive Schicht auf die Ladungsträger transportierende Schicht aufzubringen.

Als elektrisch leitfähiges Trägermaterial sind Aluminiumfolien, Aluminiumbleche, Nickelbleche, oder mit Aluminium, Zinn, Blei, Wismut oder ähnlichen Metallen bedampfte Kunststoffolien, vorzugsweise Polyesterfolien geeignet. Die Auswahl wird durch das Einsatzgebiet des elektrophotographischen Elements bestimmt.

Die Sperrschichten zwischen dem leitfähigen Trägermaterial und der ersten Schicht oder zwischen derselben und der zweiten Schicht bestehen üblicherweise aus Metalloxidschichten, z. B. Aluminiumoxidschichten, Polymeren, wie z. B. Polyamid, Polyvinylalkohol, Polyacrylate, Polystyrol oder ähnliche Systeme. Gegebenenfalls kann aber auch das Bindemittel der ersten Schicht gleichzeitig als Sperrschichtmaterial dienen.

Zur Herstellung der Ladungsträger erzeugenden Schicht der erfindungsgemäßen elektrophotographischen Aufzeichnungsmaterialien sind Polyacrylate, Polymethacrylate, Polyester, Polyphthalsäureester, Polyvinylchloride, Styrol-Maleinsäure-Copolymerisate, Epoxide und andere allgemein üblichen Harze als Bindemittel für die Aufnahme der Farbstoffe gemäß der Erfindung geeignet.

Für die zweite, die Ladungsträger transportierende Schicht eignen sich als Bindemittel besonders Polyvinylchlorid, Polyesterharze, Polyacetalharze, Polycarbonate, Polystyrol, Polyurethane, d. h. solche Bindemittel, welche spezielle elektrische Eigenschaften zeigen und dem Fachmann hierfür bekannt sind. So bieten sich auch Silikonharze, Polyvinylacetat, Chlorkautschuk, Celluloseester, Äthylcellulose und ähnliche an. Als Ladungsträger transportierende Verbindungen, welche in dieser Schicht enthalten sind, eignen sich solche die Transparenz für das sichtbare Licht nicht beeinträchtigende Verbindungen, wie

a) niedermolekulare Verbindungen, insbesondere heterocyclische Verbindungen, wie Pyrazolinderivate, Oxazole, Oxdiazole, Phenylhydrazone, Imidazole, Triphenylaminderivate, Carbazolderivate, Pyrenderivate und weitere, kondensierte Aromaten sowie
b) polymere Materialien, wie Polyvinylpyrene, Poly(N-vinylcarbazol), Copolymerisate aus Carbazol und Styrol, bzw. Vinylacetat und/oder Vinylchlorid.

Vom polymeren Typ ist besonders Poly(N-vinylcarbazol) geeignet.

Die erfindungsgemäßen elektrophotographischen Aufzeichnungsmaterialien können noch weitere Bestandteile zur Verbesserung ihrer mechanischen Eigenschaften enthalten. So können Netzmittel, wie die Silikonöle die Oberflächenqualität verbessern. Weiter können zusätzlich Sensibilisatoren oder Aktivatoren der oberen zweiten Schicht einverleibt werden. Als Sensibilisatoren, die in disperser Form gelöst werden können, sind z. B. Triphenylmethanfarbstoffe, Xanthonfarbstoffe, lösliche Perylenderivate, wie Perylentetracarbonsäureester und eine Reihe weiterer Verbindungen bekannt. Als Aktivatoren dienen Verbindungen mit hoher Elektronenaffinität, z. B. Nitroverbindungen, wie 2,4,7-Trinitrofluorenon-9.

Das erfindungsgemäße elektrophotographische Aufzeichnungsmaterial enthält hochlichtempfindliche photohalbleitende Doppelschichten, die eine hohe mechanische Stabilität aufweisen und zum Beispiel auf einer zylindrischen Trommel angeordnet oder als endloses Band umlaufen können, ohne daß Verschleißerscheinungen auftreten. Sie sind demgemäß sehr geeignet zur Verwendung für reprographische Zwecke, z. B. als Kopierschichten, elektrophotographische Offsetdruckplatten.

Die Erfindung sei anhand folgender Beispiele näher erläutert:

Beispiele 1 bis 7

Es werden je 5 g der Farbstoffe 1 bis 7 mit 3 g eines Copolymerisats aus Vinylchlorid, Acrylsäure und einem Maleinsäurediester und 25 g Tetrahydrofuran vermischt und für 12 Stunden auf einem Walzenstuhl gerollt. Das Gemisch wird eine Stunde lang auf dem Walzenstuhl homogenisiert.

Diese Dispersion wird dann mit einer Rakel auf ein unbehandeltes Aluminiumträgerblech von 175 µm Stärke aufgetragen. Der Gießspalt beträgt 60 µm. Die Rakel wird mit einer Geschwindigkeit von 260 mm/min abgezogen. Nach dem Ablüften und Trocknen für 30 Minuten bei 90°C verbleibt eine Trockenschichtdicke von 0,75 bis 0,8 µm.

Auf diese erste, deckende Schicht wird jeweils eine Lösung aus 47,75 g Poly(N-vinylcarbazol), 5,2 g Phthalsäuredihexylester und 5,75 g eines Polycarbonats mit einer Schmelztemperatur von 220 bis 230°C in einem Lösungsmittelgemisch aus 287,5 g Tetrahydrofuran und 74,25 g Toluol aufgetragen. Der Gießspalt beträgt jeweils 140 µm; die Rakel wird mit 260 mm/min abgezogen. Nach der Ablüftung und der Trocknung für 30 Minuten bei 90°C verbleibt eine Trockenschicht von 8 bis 8,5 µm Dicke.

Das so bereitete elektrophotographische Element wird dann mit einer solchen Hochspannung an einem Coronadraht in einem Abstand von 10 mm über der Schichtoberfläche beladen, daß bei allen elektrophotographischen Aufzeichnungsmaterialien ein gleichhohes negatives Oberflächenpotential erreicht wird. Nach 20 Sekunden im Dunkeln wird das elektrophotographische Element eine Sekunde lang mit dem Licht einer Xenonlampe von 150 Watt Leistungsaufnahme bestrahlt. Der lichtinduzierte prozentuale Potentialabfall, bezogen auf das Potential nach dem Dunkelabfall, wird gemessen. Weiterhin wird die Geschwindigkeit des lichtinduzierten Potentialabfalls in Volt pro Sekunde ermittelt.

Die Meßergebnisse sind in der Tabelle 1 zusammengestellt.

Tabelle 1

| Beispiel (Verbindungen) | lichtinduzierter Potentialabfall in % | Geschwindigkeit des Potentialabfalls bei Belichtung in Volt pro Sekunde |
|---|---|---|
| 1 | 51,3 | 1740 |
| 2 | 67,8 | 2770 |
| 3 | 60,0 | 1940 |
| 4 | 56,3 | 1715 |
| 5 | 68,0 | 1885 |
| 6 | 75,8 | 3645 |
| 7 | 85,2 | 3875 |

Beispiele 8 bis 14

Es werden elektrophotographische Aufzeichnungsmaterialien aus einer ersten Schicht analog den Beispielen 1 bis 7 und einer zweiten, ladungstransportierenden Schicht aus 45 Gewichtsteilen 2,5-Bis-(4-diethylaminophenyl)-oxdiazol-1,3,4, 55 Gewichtsteilen eines Polycarbonats der oben beschriebenen Klasse und 1,1 Gewichtsteilen eines Silikonöles nach dem beschriebenen Verfahren hergestellt.

Die Meßergebnisse sind in der Tabelle 2 zusammengestellt.

Tabelle 2

| Beispiel | Verbindung | lichtinduzierter Potentialabfall in % | Geschwindigkeit des Potentialabfalls bei Belichtung in Volt pro Sekunde |
|---|---|---|---|
| 8 | 1 | 53,0 | 840 |
| 9 | 2 | 86,8 | 3880 |
| 10 | 3 | 89,8 | 3475 |
| 11 | 4 | 83,7 | 4200 |
| 12 | 5 | 89,4 | 5625 |
| 13 | 6 | 82,1 | 2595 |
| 14 | 7 | 73,6 | 3470 |

Verbindung 1

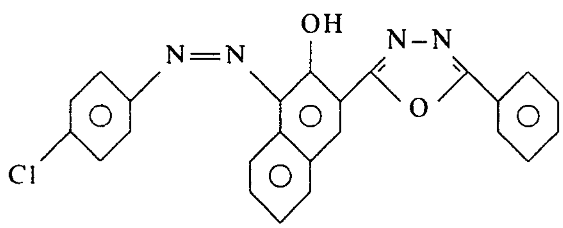

Verbindung 2

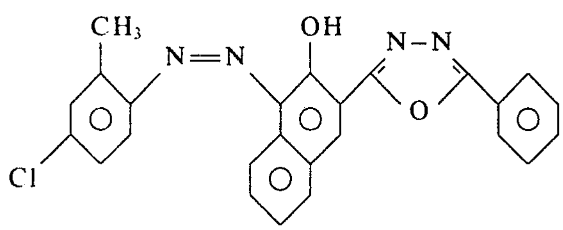

Verbindung 3

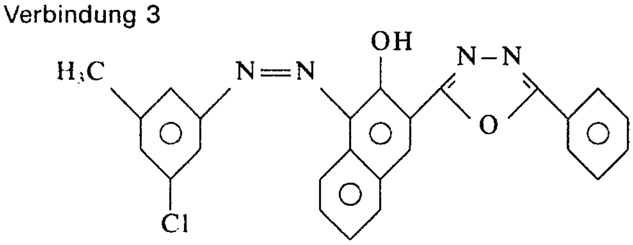

Verbindung 4

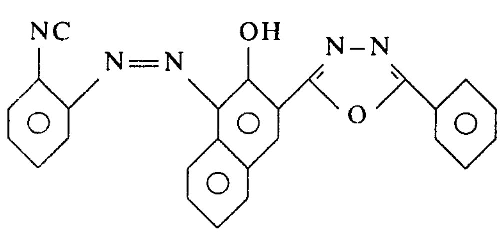

Verbindung 5

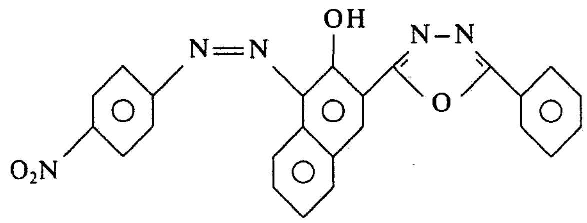

Verbindung 6

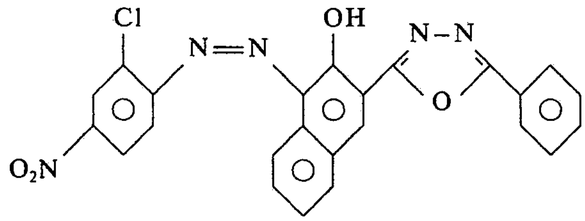

Verbindung 7

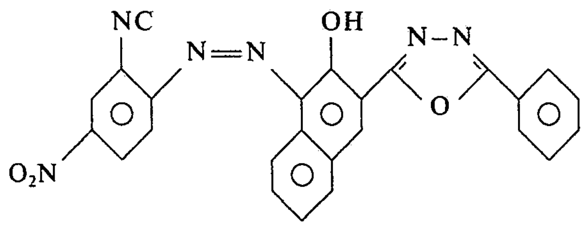

**Patentansprüche**

1. Elektrophotographisches Aufzeichnungsmaterial, im wesentlichen bestehend aus einem elektrisch leitfähigen Trägermaterial, einer ersten Ladungsträger erzeugenden Farbstoffe enthaltenden Schicht und einer zweiten, für das aktinische Licht weitgehend transparenten Schicht aus isolierenden organischen Materialien mit mindestens einer, im Licht Ladungen transportierenden Verbindung, dadurch gekennzeichnet, daß die Ladungsträger erzeugenden Farbstoffe solche der allgemeinen Formel I sind

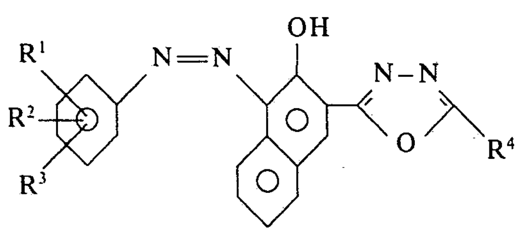

(I)

in der

$R^1$ bis $R^3$ Wasserstoff, Halogen, Alkyl, Nitro, Cyan,
$R^4$ Phenyl, Halogenphenyl, Alkylphenyl, Nitrophenyl, Dialkylaminophenyl bedeuten.

2. Elektrophotographisches Aufzeichnungsmaterial gemäß Anspruch 1, dadurch gekennzeichnet, daß die Ladungsträger erzeugenden Farbstoffe, solche der allgemeinen Formel II sind

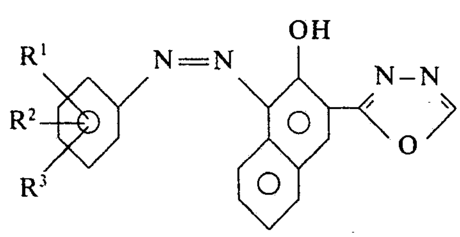

(II)

in der
$R^1$ bis $R^3$ Wasserstoff, Halogen, $C_1$—$C_4$-Alkyl, Nitro, Cyan bedeuten.

3. Elektrophotographisches Aufzeichnungsmaterial gemäß Anspruch 1, dadurch gekennzeichnet, daß in der zweiten, für das aktinische Licht weitgehend transparenten Schicht die im Licht Ladungen transportierende Verbindung Poly-(N-vinylcarbazol) ist.

4. Elektrophotographisches Aufzeichnungsmaterial gemäß Anspruch 1, dadurch gekennzeichnet, daß in der zweiten, für das aktinische Licht weitgehend transparenten Schicht die im Licht Ladungen transportierende Verbindung 2,5-Bis-(4-diethylaminophenyl)-oxdiazol 1, 3, 4 ist.

5. Verwendung der elektrophotographischen Aufzeichnungsmaterialien gemäß Anspruch 1 bis 4 für reprographische Zwecke.

**Claims**

1. An electrophotographic recording material which consists essentially of an electrically conductive base, a first layer containing a charge carrier-producing dye, and a second layer which is substantially transparent to actinic light and is composed of an insulating organic material containing at least one compound which is charge carrier-transporting when exposed to light, wherein the charge carrier-producing dye is of the formula I

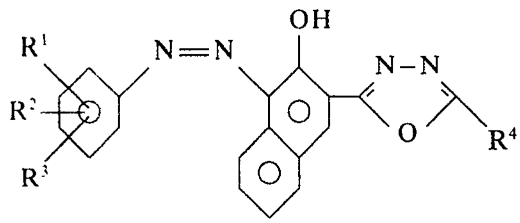

(I)

where $R^1$, $R^2$ and $R^3$ are each hydrogen, halogen, alkyl, nitro or cyano, and $R^4$ is phenyl, halophenyl, alkylphenyl, nitrophenyl or dialkylaminophenyl.

2. An electrophotographic recording material as claimed in claim 1, wherein the charge carrier-producing dye is of the formula II

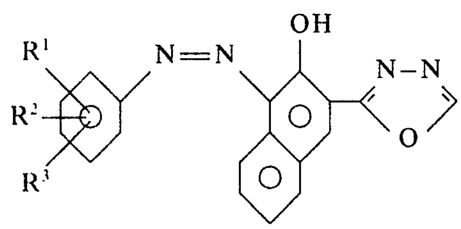

(II)

where $R^1$, $R^2$ and $R^3$ are each hydrogen, halogen, $C_1$—$C_4$-alkyl, nitro or cyano.

3. An electrophotographic recording material as claimed in claim 1, wherein in the second layer, which is substantially transparent to actinic light, the compound which is charge carrier-transporting when exposed to light is poly-(N-vinylcarbazole).

4. An electrophotographic recording material as claimed in claim 1, wherein in the second layer, which is substantially transparent to actinic light, the compound which is charge carrier-transporting when exposed to light is 2,5-bis-(4-diethylaminophenyl)-1,3,4-oxadiazole.

5. The use of an electrophotographic recording material is claimed in claim 1 to 4 for reprographic purposes.

**Revendications**

1. Matériau d'enregistrement électrophotographique, constitué essentiellement d'un matériau support conducteur de l'électricité, d'une première couche contenant des matières colorantes formant porteur de charge et d'une seconde couche, largement transparente à la lumière actinique, en matériaux organiques isolants, et ayant au moins un composé transportant des charges à la lumière, caractérisé par le fait que les matières colorantes formant porteur de charge sont celles de formule générale I

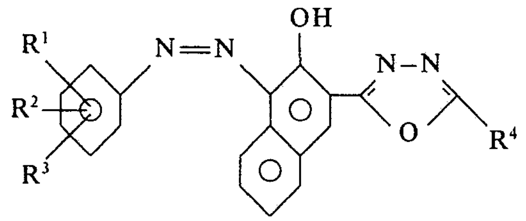

(I)

dans laquelle

$R^1$ à $R^3$ représentent hydrogène, alkyle, nitro, cyano,
$R^4$ représente phényle, halogénophényle, alkylphényle, nitrophényle, dialkylaminophényle.

2. Matériau d'enregistrement électrophotographique selon la revendication 1, caractérisé par le fait que les matières colorantes formant porteur de charge sont celles de formule générale II

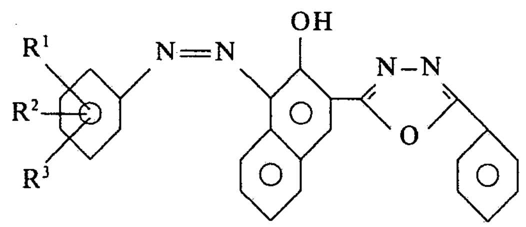

(II)

dans laquelle
$R^1$ à $R^3$ représentent hydrogène, halogène, alkyle en $C_1$—$C_4$, nitro, cyano.

3. Matériau d'enregistrement électrophotographique selon la revendication 1, caractérisé par le fait que dans la seconde couche, largement transparente à la lumière actinique, le composé transportant des charges à la lumière est le poly-(N-vinylcarbazole).

4. Matériau d'enregistrement électrophotographique selon la revendication 1, caractérisé par le fait que dans la seconde couche, largement transparente à la lumière actinique, le composé transportant des charges à la lumière est le 2,5-bis-(4-diéthylaminophényl)-oxodiazole 1,3,4.

5. Utilisation des matériaux d'enregistrement électrophotographique selon les revendications 1 à 4 pour la reprographie.